**Europäisches Patentamt**

**European Patent Office**

**Office européen des brevets**

(19)

(11) Veröffentlichungsnummer: **0 179 526**
**B1**

## EUROPÄISCHE PATENTSCHRIFT

(12)

(45) Veröffentlichungstag der Patentschrift:
28.12.88

(21) Anmeldenummer: **85201667.4**

(22) Anmeldetag: **11.10.85**

(51) Int. Cl.⁴: **H 04 N 9/64,** H 04 N 9/68,
H 04 N 9/87

(54) **Abtastregelkreis.**

(30) Priorität: **20.10.84 DE 3438564**

(43) Veröffentlichungstag der Anmeldung:
**30.04.86 Patentblatt 86/18**

(45) Bekanntmachung des Hinweises auf die Patenterteilung:
**28.12.88 Patentblatt 88/52**

(84) Benannte Vertragsstaaten:
**DE FR GB IT**

(56) Entgegenhaltungen:
**EP-A- 0 074 682**
**EP-A- 0 095 543**

(73) Patentinhaber: **Philips Patentverwaltung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB IT**

(72) Erfinder: **Johannes, Kurt, Brückwiesenstrasse 27,
D-2000 Hamburg 27 (DE)**
Erfinder: **Ruprecht, Jürgen, Hamburger Kamp 4B,
D-2000 Oststeinbek (DE)**

(74) Vertreter: **Hartmann, Heinrich, Dipl.-Ing. et al, Philips
Patentverwaltung GmbH
Wendenstrasse 35 Postfach 10 51 49,
D-2000 Hamburg 1 (DE)**

## Beschreibung

Die Erfindung betrifft einen Abtastregelkreis zur Regelung eines als Folge digitaler Datenwörter vorliegenden Eingangssignals, mit einem Stellglied, dem das Eingangssignal und eine Stellgrösse zugeführt werden, einer Vergleichsschaltung, die ein Ausgangssignal entsprechend der Differenz zwischen dem Ausgangssignal des Stellgliedes während der Abtastintervalle und einem Sollwert liefert und einem Zähler, aus dessen Ausgangssignal die Stellgrösse abgeleitet ist, dem ein Taktsignal zugeführt wird und dessen Zählrichtung in Abhängigkeit vom Vorzeichen des Ausgangssignals der Vergleichsschaltung gesteuert ist.

Ein solcher Abtastregelkreis ist aus der EP-A 00 69 856 bekannt. Er wird zur Regelung der Amplitude des aus Farbartsignal und Farbsynchronsignal bestehenden Chrominanzsignals eines FBAS-Signals (Fernsehsignal) benutzt. Da die Farbinformation an der Bildröhre im richtigen Verhältnis zum Luminanzsignal stehen soll und das Farbsynchronsignal stets ein definiertes Verhältnis zum Luminanzsignal hat, wird die Amplitude des Chrominanzsignals in Abhängigkeit vom Farbsynchronsignal geregelt. Dem bekannten Abtastregelkreis wird das Chrominanzsignal als digitales Signal zugeführt. Die detektierte Amplitude des Farbsynchronsignals wird in einem Halteglied gespeichert und das Ausgangssignal des Haltegliedes einer Vergleichsschaltung zugeführt. Bei einer Regelabweichung wird während jeder Abtastperiode der Zählerinhalt, unabhängig vom Wert des Ausgangssignals der Vergleichsschaltung, um eine Einheit erhöht bzw. vermindert. Eine grosse Regelabweichung wird daher langsamer als eine kleine ausgeregelt, da sich der Zählerinhalt in beiden Fällen jeweils um den gleichen Betrag ändert.

Der Erfindung liegt die Aufgabe zugrunde, einen Abtastregelkreis der eingangs genannten Art so auszubilden, dass mit wenig Aufwand die Regelung schnell und mit einer hohen Genauigkeit erfolgt.

Diese Aufgabe wird erfindungsgemäss dadurch gelöst, dass die Zählrate in Abhängigkeit vom Wert des Ausgangssignals der Vergleichsschaltung derart gesteuert ist, dass bei einem grossen Wert die Zählrate hoch und bei einem kleinen Wert die Zählrate niedrig ist.

Unter Zählrate wird hierbei verstanden, dass der Zählerinhalt in Abhängigkeit vom Wert des Ausgangssignals der Vergleichsschaltung um einen bestimmten Betrag pro Zeiteinheit vermindert bzw. vergrössert wird. Durch die Anpassung der Zählrate an unterschiedliche Regelabweichungen werden diese schnell ausgeregelt, so dass solche Abtastregelkreise für Systeme geeignet sind, bei denen nach kurzer Zeit die Regelabweichung gering sein muss.

Nach einer ersten Weiterbildung der Erfindung ist ein Multiplexer vorgesehen, der gesteuert vom Wert des Ausgangssignals der Vergleichsschaltung das Taktsignal verschiedenen Zählerstufen des Zählers derart zuführt, dass bei jedem Takt bei grossen Werten der Zählerinhalt um einen grösseren Betrag geändert wird als bei kleinen Werten. Die Zählrate wird in dieser Ausführungsform verändert, indem das Taktsignal mit konstanter Frequenz über den Multiplexer einer der höherwertigen Zählerstufen zugeführt wird, so dass die niederwertigen Zählerstufen nicht aktiv sind.

In einer zweiten Weiterbildung der Erfindung ist vorgesehen, dass die Frequenz eines das Taktsignal liefernden Taktgebers in Abhängigkeit vom Wert des Ausgangssignals der Vergleichsschaltung gesteuert ist. Bei dieser Ausführungsform wird das Taktsignal immer derselben Zählerstufe zugeführt, und eine Veränderung der Zählerrate erfolgt durch eine Erhöhung bzw. Verminderung der Frequenz des Taktgebers.

Die beschriebenen Ausführungsformen des Abtastregelkreises können vorteilhaft verwendet werden, wenn gemäss einer weiteren Ausgestaltung der Erfindung der Quotient aus der Zählrate und dem Wert des Ausgangssignals der Vergleichsschaltung bei einer grossen Amplitude grösser ist als bei einer kleinen. Eine Regelabweichung wird schnell und sehr genau ausgeregelt, wenn der Quotient in oben genannter Weise gewählt wird. Eine grosse Regelabweichung wird schnell ausgeregelt, wenn der Quotient gross ist, und eine kleine Regelabweichung wird langsamer, aber genau ausgeregelt, wenn der Quotient klein ist. Wenn gemäss einem variablen Quotienten die Zählrate des Zählers von der Regelabweichung abhängig ist, entspricht dies einem Regelglied mit integrierendem Verhalten, dessen Zeitkonstante veränderbar ist. Die Wahl der Quotienten muss aber so erfolgen, dass der Abtastregelkreis nicht instabil wird.

Eine andere vorteilhafte Ausführungsform ergibt sich, wenn die Zählrichtung des Zählers vom Vorzeichen-Bit des digitalen Ausgangssignals der Vergleichsschaltung und der Multiplexer bzw. die Frequenz des Taktgebers von den höchstwertigen Bits des digitalen Ausgangssignals der Vergleichsschaltung gesteuert werden. Dadurch, dass die niederwertigen Bits keinen Einfluss auf die Regelung haben, wird der Schaltungsaufwand verringert.

Das Stellglied des Abtastregelkreises kann so ausgeführt werden, dass sich eine Amplitudenregelung ergibt. Dieses kann gemäss DE-OS 31 36 216 ausgelegt werden, wobei das Stellglied eine Shiftstufe und einen Multiplizierer umfasst, der Shiftstufe, in der jeder Abtastwert um eine steuerbare ganze Anzahl Stellen verschiebbar ist, das Eingangssignal zugeführt wird, und das Ausgangssignal der Shiftstufe auf den Multiplizierer gegeben wird. Dabei kann gemäss einer weiteren Ausgestaltung der Erfindung die höherwertigen Bits des Zählers die Anzahl der in der Shiftstufe zu verschiebenden Stellen festlegen und die niederwertigen Bits des Zählers den Multiplikator für den Multiplizierer bilden. Durch die Aufteilung der Multiplikation in eine Stellenverschiebung, die in der Shiftstufe erfolgt, und einer nachfolgenden Multiplikation der stellenverschobenen Werte, ergibt sich eine sehr gute Ausnutzung des Multiplizierers, da dieser nur signifikante Stellen verarbeitet und somit für eine minimale Anzahl von Stellen ausgelegt werden kann.

Besondere Vorteile der Erfindung ergeben sich, wenn das digitale Eingangssignal das aus Farbsynchronsignal und Farbartsignal bestehende digitale Chrominanzsignal eines FBAS-Signals (Fernsehsignal) ist und die Amplitude des Farbsynchronsignals in der Vergleichsschaltung mit einem Sollwert verglichen wird. Der Abtastregelkreis wird also zur Regelung der Amplitude des digitalen Chrominanzsignals in Fernsehempfängerschaltungen oder zur Regelung des Chrominanzsignals bei Aufnahme bzw. Wiedergabe in einem Videorecorder verwendet. Wird das digitale Chrominanzsignal mit dem Abtastregelkreis geregelt, der mit der ersten Ausführungsform der Erfindung aufgebaut ist, ist es von Vorteil, wenn das dem Zähler zugeführte Taktsignal ein zeilenfrequentes Taktsignal ist. Es wird also in jeder Zeile die Amplitude des Farbsynchronsignals detektiert, der Soll-Ist-Vergleich durchgeführt und der Zählerinhalt zu Beginn der nächsten Zeile verändert und dann während einer Zeile konstant gehalten.

In einer weiteren Ausführungsform der Erfindung ist vorgesehen, dass das Chrominanzsignal von einem Videorecorder mit mehreren Magnetköpfen wiedergegeben wird, dass mehrere Register vorgesehen sind, deren Anzahl gleich der Anzahl der Magnetköpfe ist und dass das Ausgangssignal des Zählers nach jedem Teilbild in eines der Register und das Ausgangssignal eines anderen der Register in den Zähler eingeschrieben wird. Da die Magnetköpfe des Videorecorders z.B. unterschiedliche Abnutzungserscheinungen aufweisen, muss also für die Signale jedes Magnetkopfes eine eigene Regelung vorgenommen werden. Diese Ausführungsform bewirkt, dass zu Beginn eines Teilbildes der Inhalt vorhanden ist, der im Zählerstand als der aktive Magnetkopf zuletzt aktiviert war.

Anhand der Zeichnungen werden im folgenden Ausführungsbeispiele der Erfindung näher beschrieben. Es zeigt:

Fig. 1 ein Blockschaltbild eines erfindungsgemässen Abtastregelkreises für eine digitale Signalverarbeitung,

Fig. 2 eine erste Ausführungsform des Regelgliedes 6 in Fig. 1,

Fig. 3 eine zweite Ausführungsform des Regelgliedes 6 in Fig. 1,

Fig. 4 ein Diagramm zur Erläuterung der Arbeitsweise des in Fig. 3 dargestellten Regelgliedes,

Fig. 5 eine Ausführungsform eines Teils des Regelgliedes zur Verwendung in einer Videorecorder-Wiedergabeanordnung und

Fig. 6 ein Diagramm zur Erläuterung der Arbeitsweise der in Fig. 5 dargestellten Schaltungsanordnung.

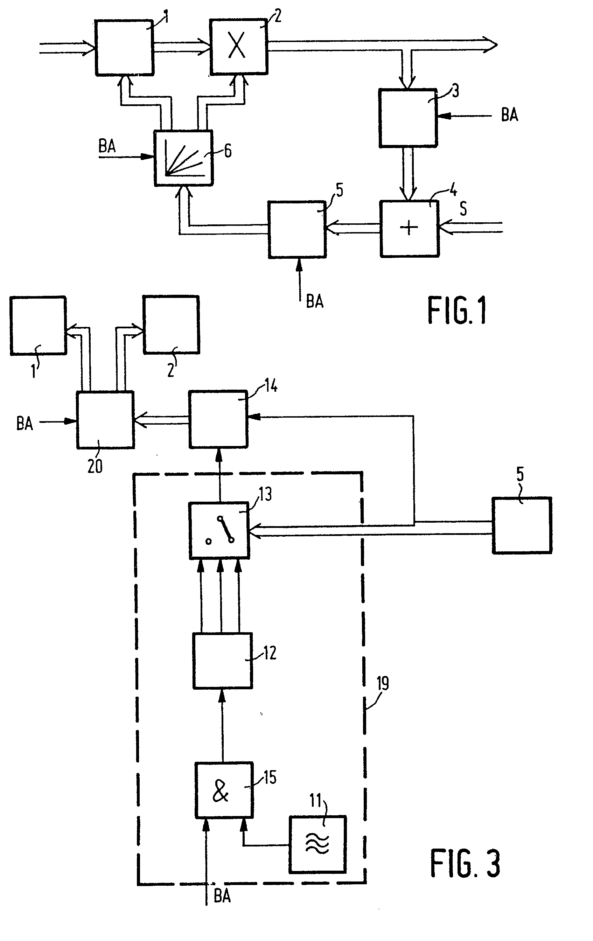

In Fig. 1 wird das aus Farbsynchronsignal und Farbartsignal bestehende digitale Chrominanzsignal einer Shiftstufe 1 und das Ausgangssignal der Shiftstufe einem Multiplizierer 2 zugeführt. Das digitale Chrominanzsignal wurde z.B. mit der vierfachen Farbträgerfrequenz, das sind 17,7 MHz, abgetastet. Das Ausgangssignal des Multiplizierers 2, das z.B. eine Auflösung von 8 Bit hat, ist das Ausgangssignal des Abtastregelkreises und das Eingangssignal eines Amplitudendetektors 3. In einer Vergleichsschaltung 4 wird die Differenz zwischen dem Ausgangssignal des Amplitudendetektors 3 und einem Sollwert S gebildet. Das Ausgangssignal der Vergleichsschaltung 4 wird auf ein Register 5 gegeben und anschliessend einem Regelglied 6 mit integrierendem Verhalten zugeführt. Zwei Ausgänge des Regelgliedes 6 sind mit der Shiftstufe 1 und dem Multiplizierer 2 verbunden. Dem Amplitudendetektor 3, dem Register 5 und dem Regelglied 6 werden ausserdem noch Steuersignale zugeführt.

Die Funktionsweise der Shiftstufe 1 und des Multiplizierers 2 ist in der DE-OS 31 36 216 ausführlich beschrieben. Das Regelglied 6 gibt der Shiftstufe 1 Steuersignale, die die Anzahl der zu verschiebenden Stellen kennzeichnen. Dem Multiplizierer 2 wird der Multiplikator vom Regelglied 6 zugeführt. Im Amplitudendetektor 3 wird die maximale Amplitude des Farbsynchronsignals detektiert oder der Amplitudenmittelwert des Farbsynchronsignals gebildet, da die Regelung in Abhängigkeit von der Amplitude des Farbsynchronsignals vorgenommen wird. Mit der positiven Flanke eines im Farbfernsehempfangsgerät oder Videorecorder verfügbaren Farbsynchron-Austastimpulses BA wird der Amplitudendetektor 3 aktiviert. Die zeilenfrequenten Impulse BA beginnen vor dem Farbsynchronsignal und enden erst nach dessen Ende. Der Amplitudendetektor 3 wird wieder inaktiv mit der negativen Flanke des Impulses BA.

Ausführungsformen des Amplitudendetektors sind in der DE-OS 31 36 216 beschrieben. Die Regelabweichung wird in der Vergleichsschaltung 4 detektiert. Diese kann als Addierer ausgelegt werden, wenn der Sollwert S negativ vorgegeben ist. Das Additionsergebnis wird im Register 5 nach der negativen Flanke des Impulses A gespeichert. Die im Register 5 gespeicherten Daten können vom Regelglied 6 nun übernommen werden. Es ist auch möglich, das Register 5 vor der Vergleichsschaltung 4 anzuordnen.

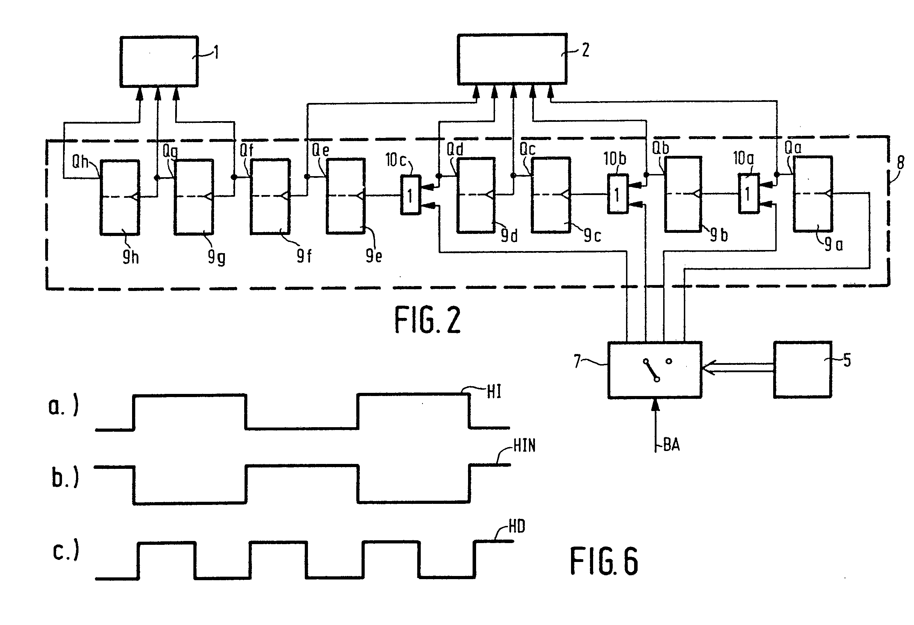

In Fig. 2 ist eine erste Ausführungsform des Regelgliedes 6 mit integrierendem Verhalten dargestellt. Das Ausgangssignal des Registers 5 und die Impulse BA werden einem Multiplexer 7 zugeführt, der mit einem Zähler 8 verbunden ist. In diesem Ausführungsbeispiel sind die wesentlichen Schaltungselemente eines achtstufigen Vorwärts-Rückwärts-Asynchronzählers dargestellt, die die Funktionsweise des erfindungsgemässen Regelgliedes verdeutlichen. Dieser enthält acht Flip-Flops 9a bis 9h und drei ODER-Gatter 10a bis 10c. Eine Leitung des Multiplexers 7 ist mit dem Takteingang des Flip-Flops 9a verbunden, dessen Ausgang Qa mit einem Eingang eines ODER-Gatters 10a verbunden ist. Auf den zweiten Eingang des ODER-Gatters 10a führt eine andere Leitung des Multiplexers 7. Der Ausgang des ODER-Gatters 10a ist mit dem Takteingang des Flip-Flops 9b verbunden. Der Ausgang Qb des Flip-Flops 9b und eine dritte Leitung des Multiplexers 7 führen auf ein ODER-Gatter 10b, dessen Ausgang mit dem Takteingang eines dritten Flip-Flops 9c verbunden ist. Der Ausgang Qc des Flip-Flops 9c führt auf den Takteingang eines vierten Flip-Flops 9d, dessen Ausgang Qd und eine vierte Leitung des Multiplexers 7 auf ein ODER-Gatter 10c führen. Der Ausgang des ODER-Gatters 10c ist mit dem Takteingang des Flip-Flops 9e und dessen Ausgang Qe mit dem Takteingang des Flip-Flops 9f verbunden. In dieser Art sind noch die Flip-Flops 9g und 9h dem Flip-Flop 9f nachgeschaltet.

Weiterhin führen die Ausgänge Qa bis Qe auf den Multiplizierter 2 und die Ausgänge Qf bis Qh auf die Shiftstufe 1.

Über den Multiplexer 7 wird ein Impuls BA über eine der vier Leitungen der entsprechenden Zählerstufe zugeführt. Wird der Impuls BA jeweils nur dem Flip-Flop 9a zugeführt, dann arbeitet der Zähler wie die bekannten Asynchronzähler, und der Zählerinhalt wird um eine Einheit erhöht. Wird aber dem ODER-Gatter 10a der Impuls BA zugeführt, so kann sich nur der Zählerinhalt im Flip-Flop 9b und den nachfolgenden Flip-Flops ändern. Der Inhalt des Flip-Flops 9a bleibt erhalten. Der Zählerinhalt wird dann um zwei Einheiten erhöht. Wird der Impuls BA nun aber dem ODER-Gatter 10b oder 10c zugeführt, so ändert sich der Zählerinhalt jeweils um vier Einheiten oder sechzehn Einheiten. Dadurch ist der Quotient bei einer grossen Regelabweichung grösser als bei einer kleinen Regelabweichung. Da mit dem Zähler vier verschiedene Zählraten gewählt werden können, benötigt der Multiplexer nur eine Information von 2 Bit, um eine der vier Leitungen auszuwählen. Daher werden dem Multiplexer nur die zwei höchstwertigen Bit des Ausgangssignals der Vergleichsschaltung 4 zugeführt. Wie oben erwähnt, sind nur die wesentlichen Schaltungselemente des Zählers für die Erfindung dargestellt. In diesem Ausführungsbeispiel ist der Zähler nur als Vorwärtszähler ausgeführt worden. Durch bekannte Schaltungsmassnahmen lässt sich dieser Zähler zu einem Vorwärts-Rückwärts-Zähler ausbauen. Diesem wird dann zur Bestimmung der Zählrichtung das Vorzeichen-Bit des Ausgangssignals der Vergleichsschaltung 4 zugeführt. Ebenso einfach ist es, den Zähler durch zusätzliche Stufen zu erweitern und die Anzahl der Zählraten zu vergrössern bzw. zu verkleinern. Der Zählerinhalt der ersten fünf Zählerstufen bildet nun den Multiplikator für den Multiplizierer 2 und der Zählerinhalt der letzten drei Stufen gibt der Shiftstufe die Information über die Anzahl der zu verschiebenden Stellen an. Soll der Zählerinhalt nicht mit jeder Zeile verändert werden, so können niederwertige Zählerstufen angefügt werden, die nicht mit dem Multiplizierer verbunden sind. Auch lässt sich der Zähler als Synchronzähler realisieren.

Die Regelung ist durch folgenden zeitlichen Ablauf charakterisiert:

Nach der Vorderflanke eines Impulses BA wird bis zum Ende dieses Impulses die Amplitude des Farbsynchronsignals im Amplitudendetektor bestimmt. Danach wird der Vergleich durchgeführt und im Register 5 des Ausgangssignals gespeichert. Mit der Vorderflanke des folgenden Impulses BA wird der Zählerinhalt verändert. Anschliessend wird das Chrominanzsignal mit der neuen Stellgrösse multipliziert.

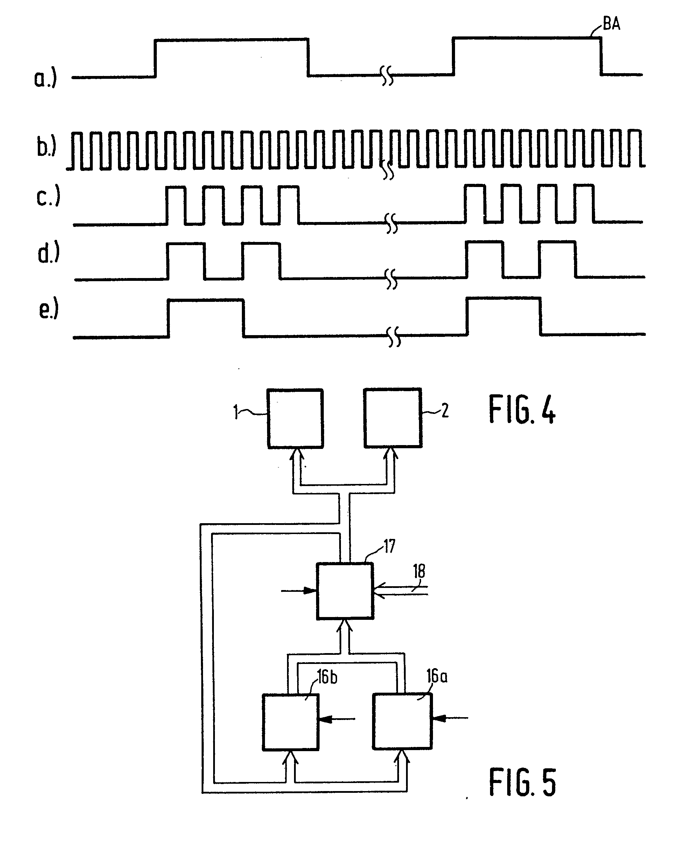

Eine zweite Ausführungsform des Regelgliedes 6 mit integrierendem Verhalten wird in Fig. 3 gezeigt. Ein Taktgeber 19 ist mit dem Register 5 verbunden und erhält auf einer Steuerleitung die Impulse BA. Die vom Taktgeber 19 erzeugten Taktsignale werden einem Zähler 14 zugeführt. Ein weiterer Eingang des Zählers 14, über den die Zählrichtung gesteuert wird, ist mit einem Ausgang des Registers 5 verbunden. Das Ausgangssignal des Zählers 14 wird einem Register 20 zugeführt, dessen verschiedene Ausgänge mit dem Multiplizierer 2 und mit der Shiftstufe 1 verbunden sind. Ebenso erhält das Register 20 in einem weiteren Eingang die Impulse BA. Der Zähler kann ein handelsüblicher Vorwärts-Rückwärts-Zähler sein. Der Taktgeber 19 enthält einen Oszillator 11, der ein Taktsignal erzeugt, dessen Frequenz einem Vielfachen der Zeilenfrequenz entspricht, ein UND-Gatter 15, einen Zähler 12 und einen Demultiplexer 13. Das Taktsignal des Oszillators 11 und die Impulse BA werden auf das UND-Gatter 15 gegeben. Das Ausgangssignal des UND-Gatters 15 wird dem Zähler 12 und dessen Ausgangssignale einem Demultiplexer 13 zugeführt. Weitere Eingänge des Demultiplexers 13 sind mit dem Register 5 verbunden. Das Ausgangssignal des Demultiplexers 13 wird auf den Zähler 14 gegeben.

Mit Fig. 4 lässt sich die Funktionsweise der zweiten Ausführungsform des Regelgliedes 6 erläutern. In Zeile a der Fig. 4 sind die Impulse BA und in Zeile b das Taktsignal des Oszillators 11 dargestellt. Das Taktsignal wird dem Zähler 12 durch das UND-Gatter nur dann zugeführt, wenn der Impuls BA auftritt. Der Zähler 12 enthält mehrere Zählerstufen, die die Frequenz des Taktgebers 11 in bekannter Art unterteilen. In Zeile c der Fig. 4 ist das Ausgangssignal einer Zählerstufe des Zählers 12 dargestellt, das nur während der Zeit, in der der Impuls BA auftritt, aus vier Impulsen besteht. In Zeile d der Fig. 4 ist ein anderes Ausgangssignal gezeigt, das jeweils zwei Impulse enthält, und das dritte Ausgangssignal ist in Zeile e gezeigt, das aus jeweils einem Impuls besteht. In Abhängigkeit von dem Wert des Ausgangssignals der Vergleichsschaltung wird der Demultiplexer 13 so geschaltet, dass eines der Ausgangssignale des Zählers 12 dem Zähler 14 zugeführt wird. Wird das Ausgangssignal von Zeile c der Fig. 4 auf den Zähler 14 gegeben, so wird der Zählerinhalt um vier Einheiten erniedrigt bzw. erhöht, da mit jeder Vorderflanke des Taktsignals sich der Zählerinhalt verändert. Die Zählrichtung hängt vom Vorzeichen des Ausgangssignals der Vergleichsschaltung ab. Das zeilenfrequente Taktsignal kann beliebig gewählt werden. Von Vorteil ist, wenn die Frequenz des Taktsignals gleich der Abtastfrequenz ist.

Die Regelung mit der zweiten Ausführungsform ist durch den folgenden zeitlichen Ablauf charakterisiert:

Der Ablauf unterscheidet sich erst nach der Speicherung des Ausgangssignals der Vergleichsschaltung 4 im Register 5 von der ersten Ausführungsform. Während einer Zeile ist die Amplitude detektiert worden, der Vergleich durchgeführt worden und das Ausgangssignal der Vergleichsschaltung im Register 5 gespeichert worden. Nach der Vorderflanke des folgenden Impulses BA wird der Zählerinhalt bis zum Ende des Impulses BA verändert. Mit der Rückflanke des Impulses BA wird der Zählerinhalt in das Register 20 eingeschrieben. Die neue Stellgrösse, die im Register 20 gespeichert ist, wird nun mit dem Chrominanzsignal multipliziert.

Mit dieser Ausführungsform kann der Zählerinhalt auch um einen Betrag geändert werden, der nicht aus einer Potenz von zwei besteht, da der Zählerinhalt von der Anzahl der Impulse des Taktsignals abhängt. Es können also auch Quotienten gewählt werden, die linear mit der Regelabweichung vergrössert werden.

Wenn keine Regelabweichung vorhanden ist, wird in den hier vorliegenden Ausführungsformen der Zählerinhalt während jeder Zeile mit der niedrigsten Zählerrate verändert. Der Zählerinhalt schwankt also um einen bestimmten Betrag. Die Schaltung kann aber so modifiziert werden, dass bei nicht vorhandener Regelabweichung der Zählerinhalt nicht mehr verändert wird. Dazu kann z.B. ein Schalter in die Leitung eingesetzt werden, die das Taktsignal dem Zähler zuführt. Der Schalter ist mit einer Logikschaltung und diese mit den Ausgängen der Vergleichsschaltung verbunden. Die Logikschaltung steuert den Schalter nun so, dass er nur bei einer Regelabweichung geschlossen ist.

Die Stabilität des Abtastregelkreises ist von der Zählrate abhängig. Die Zählrate darf nicht so gewählt werden, dass das Ausgangssignal des Stellgliedes (Istwert) um mehr als 100 Prozent geändert wird, da dann das System instabil wird.

In Fig. 5 ist eine Ausführungsform des Regelgliedes mit integrierendem Verhalten dargestellt, die besondere Vorteile bei der Regelung des Chrominanzsignals im Wiedergabeteil eines Videorecorders mit zwei Magnetköpfen hat. Die Datenausgänge des Zählers 17, der wie der Zähler 8 oder der Zähler 14 aufgebaut sein kann, ist mit den Dateneingängen zweier Register 16a und 16b und mit der Shiftstufe 1 und dem Multiplizierer 2 verbunden. Die Datenausgänge der beiden Register 16a und 16b sind mit den Dateneingängen des Zählers 17 verbunden. Über die Verbindung 18 werden dem Zähler 17 noch die Signale vom Multiplexer 7 bzw. Demultiplexer 13 und das Signal für die Zählrichtung zugeführt. Die beiden Register 16a und 16b und der Zähler 17 erhalten ausserdem noch Steuerimpulse.

Bei handelsüblichen Zählern ist es möglich, den Zählerinhalt durch Zuführen eines Datenwortes voreinzustellen. Dazu muss dem entsprechenden Dateneingang des Zählers ein Freigabesignal zugeführt werden. Bei Videorecordern, die mit zwei Magnetköpfen betrieben werden, wird von Halbbild zu Halbbild der Magnetkopf gewechselt. Da die beiden Magnetköpfe durch z.B. unterschiedliche Abnutzungserscheinungen verschiedene Übertragungscharakteristiken haben, ist die Regelung der Signale dieser Magnetköpfe auch unterschiedlich. Der in einem Videorecorder oder Fernsehgerät vorhandene Halbbildimpuls (Impuls HI) wird zur Steuerung dieser Schaltungsanordnung verwendet. Eine hier nicht näher beschriebene Steuerschaltung erzeugt Impulse HD, die aus den Impulsen HI abgeleitet sind, die doppelte Frequenz der Impulse HI besitzen und gegenüber den Impulsen HI um eine gewisse Zeit verschoben sind.

In Fig. 6 sind in Zeile a Impulse HI, in Zeile b invertierte Impulse HI (Impulse HIN) und in Zeile c die Impulse HD dargestellt. Dem Takteingang des Registers 16a werden die Impulse HI und dem Takteingang des Registers 16b die Impulse HIN zugeführt. Die in den beiden Registern gespeicherten Daten werden durch ein Freigabesignal verfügbar gemacht. Dazu wird dem Register 16a ein Impuls HIN und dem Register 16b ein Impuls HI zugeführt. Mit der Vorderflanke der dem Zähler 17 zugeführten Impulse HD wird der Dateneingang des Zählers 17 freigegeben und ein neuer Zählerstand voreingestellt. Zu Beginn eines Halbbildes wird mit der Vorderflanke eines Impulses HI der Zählerstand im Register 16a gespeichert. Die gespeicherten Daten des Registers 16b werden freigegeben und der Zähler 17 kann diese übernehmen, nachdem der Freigabeimpuls gekommen ist. Zu Beginn des nächsten Halbbildes wird mit der Vorderflanke des Impulses HIN der Zählerinhalt in das Register 16b übernommen und mit der Vorderflanke des Impulses HD werden, nachdem die Daten des Registers 16a freigegeben worden sind, diese in den Zähler 17 übernommen. Beim nächsten Halbbild wiederholt sich dieser Vorgang von neuem. Der Vorteil dieser Schaltungsanordnung ist, dass nicht bei jedem Magnetkopfwechsel eine neue Regelung beginnen muss, sondern die Regelung mit den gespeicherten und nun wieder im Zähler eingeschriebenen Werten fortgesetzt wird.

Die Register lassen sich auch hintereinander anordnen, so dass der Zählerinhalt zuerst immer in demselben Register gespeichert wird und dann in das andere Register weitergeschoben wird.

**Patentansprüche**

1. Abtastregelkreis zur Regelung eines als Folge digitaler Datenwörter vorliegenden Eingangssignals, mit einem Stellglied (1, 2), dem das Eingangssignal und eine Stellgrösse zugeführt werden, einer Vergleichsschaltung (4), die ein Ausgangssignal entsprechend der Differenz zwischen dem Ausgangssignal des Stellgliedes (1, 2) während der Abtastintervalle und einem Sollwert liefert und einem Zähler (8, 14, 17), aus dessen Ausgangssignal die Stellgrösse abgeleitet ist, dem ein Taktsignal zugeführt wird und dessen Zählrichtung in Abhängigkeit vom Vorzeichen des Ausgangssignals der Vergleichsschaltung (4) gesteuert ist, dadurch gekennzeichnet, dass die Zählrate in Abhängigkeit vom Wert des Ausgangssignals der Vergleichsschaltung (4) derart gesteuert ist, dass bei einem grossen Wert die Zählrate hoch und bei einem kleinen Wert die Zählrate niedrig ist.

2. Abtastregelkreis nach Anspruch 1, dadurch gekennzeichnet, dass ein Multiplexer (7) vorgesehen ist, der gesteuert vom Wert des Ausgangssignals der Vergleichsschaltung (4) das Taktsignal verschiedenen Zählerstufen des Zählers (8, 14, 17) derart zuführt, dass bei jedem Takt bei grossen Werten der Zählerinhalt um einen grösseren Betrag geändert wird, als bei kleinen Werten.

3. Abtastregelkreis nach Anspruch 1, dadurch gekennzeichnet, dass die Frequenz eines das Taktsignal liefernden Taktgebers (19) in Abhängigkeit vom Wert des Ausgangssignals der Vergleichsschaltung (4) gesteuert ist.

4. Abtastregelkreis nach einem der vorhergehenden Ansprüche, dadurch gekennzeichnet, dass der Quotient aus der Zählrate und dem Wert des Ausgangssignals der Vergleichsschaltung (4) bei einem grossen Wert grösser ist als bei einem kleinen.

5. Abtastregelkreis nach einem der vorhergehenden Ansprüche, dadurch gekennzeichnet, dass die Zählrichtung des Zählers (8, 14, 17) vom Vorzeichen- Bit des digitalen Ausgangssignals der Vergleichsschaltung und der Multiplexer (7) bzw. die Frequenz des Taktgebers (19) von den höchstwertigen Bits des digitalen Ausgangssignals der Vergleichsschaltung (4) gesteuert werden.

6. Abtastregelkreis nach einem der vorhergehenden Ansprüche, wobei das Stellglied eine Shiftstufe (1) und einen Multiplizierer (2) umfasst, der Shiftstufe (1), in der jeder Abtastwert um eine steuerbare ganze Anzahl Stellen verschiebbar ist, das Eingangssignal zugeführt wird und das Ausgangssignal der Shiftstufe (1) auf den Multiplizierer (2) gegeben wird, dadurch gekennzeichnet, dass die höherwertigen Bits des Zählers (8, 14, 17) die Anzahl der in der Shiftstufe (1) zu verschiebenden Stellen festlegen und die niederwertigen Bits des Zählers (8, 14) den Multiplikator für den Multiplizierer (2) bilden.

7. Abtastregelkreis nach einem der vorhergehenden Ansprüche, dadurch gekennzeichnet, dass das digitale Eingangssignal das aus Farbsynchronsignal und Farbartsignal bestehende digitale Chrominanzsignal eines FBAS-Signals (Fernsehsignal) ist und die Amplitude des Farbsynchronsignals in der Vergleichsschaltung (4) mit einem Sollwert verglichen wird.

8. Abtastregelkreis nach Anspruch 2 und 7, dadurch gekennzeichnet, dass das dem Zähler zugeführte Taktsignal (8, 14, 17) ein zeilenfrequentes Taktsignal ist.

9. Abtastregelkreis nach einem der vorhergehenden Ansprüche, dadurch gekennzeichnet, dass das Chrominanzsignal von einem Videorecorder mit mehreren Magnetköpfen wiedergegeben wird, dass mehrere Register (16a, 16b) vorgesehen sind, deren Anzahl gleich der Anzahl der Magnetköpfe ist und dass das Ausgangssignal des Zählers (17) nach jedem Teilbild in eines der Register (16a) und das Ausgangssignal eines anderen der Register (16b) in den Zähler (17) eingeschrieben wird.

**Revendications**

1. Boucle de régulation d'échantillonnage destinée à régler un signal d'entrée présent sous la forme d'une succession de mots de données numériques, comportant un élément de réglage (1, 2), auquel sont appliqués le signal d'entrée et une grandeur réglante, un circuit comparateur (4), qui fournit un signal de sortie correspondant à la différence entre le signal de sortie de l'élément de réglage (1, 2) pendant l'intervalle d'échantillonnage et une valeur de consigne, et un compteur (8, 14, 17) du signal de sortie duquel est dérivée la grandeur réglante, auquel est appliqué un signal d'horloge et dont la direction de comptage est régie en fonction du signe du signal de sortie du circuit comparateur (4), caractérisée en ce que le taux de comptage est commandé en fonction de la valeur du signal de sortie du circuit comparateur (4) d'une manière telle que, pour une grande valeur, le taux de comptage soit élevé et que, pour une petite valeur, le taux de comptage soit faible.

2. Boucle de régulation d'échantillonnage suivant la revendication 1, caractérisée en ce qu'un multiplexeur (7) qui, sous la commande de la valeur du signal de sortie du circuit comparateur (4), applique le signal d'horloge à divers étages de comptage du compteur (8, 14, 17) d'une manière telle qu'à chaque impulsion, le contenu du compteur soit modifié d'un montant plus important pour de grandes valeurs que pour de petites valeurs.

3. Boucle de régulation d'échantillonnage suivant la revendication 1, caractérisée en ce que la fréquence d'une horloge (19) fournissant le signal d'horloge est commandée en fonction de la valeur du signal de sortie du circuit comparateur (4).

4. Boucle de régulation d'échantillonnage suivant l'une quelconque des revendications précédentes, caractérisée en ce que le quotient du taux de comptage et de la valeur du signal de sortie du circuit comparateur (4) est plus grand pour une grande amplitude que pour une petite.

5. Boucle de régulation d'échantillonnage suivant l'une quelconque des revendications précédentes, caractérisée en ce que la direction de comptage du compteur (8, 14, 17) est régie par le bit de signe du signal de sortie numérique du circuit comparateur et le multiplexeur (7) ou la fréquence de l'horloge (19) l'est par les bits les plus significatifs du signal de sortie numérique du circuit comparateur (4).

6. Boucle de régulation d'échantillonnage suivant l'une quelconque des revendications précédentes, dans laquelle l'élément de réglage comprend une unité de décalage (1) et un élément multiplicateur (2), le signal d'entrée étant appliqué à l'unité de décalage (1), dans laquelle chaque valeur d'échantillonnage peut être décalée d'un nombre entier de positions pouvant être commandé, et le signal de sortie de l'unité de décalage (1) étant appliqué à l'élément multiplicateur (2), caractérisée en ce que les bits les plus significatifs du compteur (8, 14, 17) fixent le nombre des positions de décalage dans l'unité de décalage (1) et les bits les moins significatifs du compteur (8, 14) forment le multiplicateur pour l'élément multiplicateur (2).

7. Boucle de régulation d'échantillonnage suivant l'une quelconque des revendications précédentes, caractérisée en ce que le signal d'entrée numérique est le signal de chrominance numérique, formé du signal de synchronisation couleur et du signal de chromaticité, d'un signal vidéo (signal de télévision) et l'amplitude du signal de synchronisation couleur est comparée dans le circuit comparateur (4) à une valeur de consigne.

8. Boucle de régulation d'échantillonnage suivant les revendications 2 et 7, caractérisée en ce que le signal d'horloge appliqué au compteur (8, 14, 17) est un signal d'horloge à fréquence de lignes.

9. Boucle de régulation d'échantillonnage suivant l'une quelconque des revendications précédentes caractérisée en ce que le signal de chrominance est reproduit par un enregistreur vidéo comportant plusieurs têtes magnétiques, que plusieurs registres (16a, 16b) sont prévus en nombre égal au nombre des têtes magnétiques, et qu'après chaque trame, le signal de sortie du compteur (17) est enregistré dans un des registres (16a) et le signal de sortie d'un autre registre (16b), dans le compteur (17).

**Claims**

1. A gated control circuit for controlling an input signal available as a sequence of digital data words, including an adjusting member (1, 2) to which the input signal and a setting value are applied, a comparator circuit (4) producing an output signal in accordance with the difference between the output signal of the adjusting member (1, 2) during the gating period and a desired value, and a counter (8, 14, 17) from whose output signal the setting value is derived, to which a clock signal is applied and whose counting direction is controlled in dependence on the sign of the output signal of the comparator circuit (4) charakterized in that the counting rate is controlled such, in dependence on the value of the output signal of the comparator circuit (4) that for a high value the counting rate is high and that the counting rate is low for a low value.

2. A gated control circuit as claimed in Claim 1, charakterized in that a multiplexer (7) is provided which, controlled by the value of the output signal of the comparator circuit (4) so applies the clock signal to several counting stages of the counter (8, 14, 17), that at each clock the counting content is changed by a larger amount for high values than for low values.

3. A gated control circuit as claimes in Claim 1, characterized in that the frequency of a clock generator (19) producing the clock signal is controlled in dependence on the value of the output signal of the comparator circuit (4).

4. A gated control circuit as claimed in any one of the preceding Claims, characterized in that the quotient of the counting rate and the value of the output signal of the comparator circuit (4) is higher for a high value than for a low value.

5. A gated control circuit as claimed in any one of the predecing Claims, characterized in that the counting direction of the counter (8, 14, 17) is controlled by the sign bit of the digital output signal of the comparator circuit, and the multiplexer (7) or the frequency of the clock generator (19), respectively is controlled by the most significant bits of the digital output signal of the comparator circuit (4).

6. A gated control circuit as claimed in any one of the preceding Claims, the adjusting member comprising a shifting stage (1) and a multiplexer (2), the input signal being applied to the shifting state (1) in which each sampling value is capable of being shifted through a controllable integral number of positions, and the output signal of the shifting stage (1) being applied to the multiplier (2), characterized in that the more significant bits of the counters (8, 14, 17) determine the number of positions to be shifted in the shifting stage (1) and the less significant bits of the counter (8, 14) constitute the multiplication coefficient for the multiplier (2).

7. A gated control circuit as claimed in any one of the preceding Claims, characterized in that the digital input signal is the digital chrominance signal formed by the colour synchronizing signal and the chrominance signal of a FBAS signal (television signal) and the amplitude of the colour synchronizing signal is compared in the comparator circuit (4) with a desired value.

8. A gated control circuit as claimed in Claims 2 and 7, characterized in that the clock signal (8, 14, 17) applied to the counter is a clock signal of the line frequency.

9. A gated control circuit as claimed in any one of the preceding Claims, charakterized in that the chrominance signal is displayed by a video recorder having a plurality of magnetic heads, that a plurality of registers (16a, 16b) are provided, whose number is equal to the number of magnetic heads and that after each field the output signal of the counter (17) is entered into one of the registers (16a) and the outout signal of one of the other registers (16b) is entered into the counter (17).

1/3

FIG.1

FIG. 3

FIG. 2

9h  9g  9f  9e  10c  9d  9c  10b  9b  10a  9a

Qh  Qg  Qf  Qe  Qd  Qc  Qb  Qa

1  2  8  7  5

BA

a.)  HI

b.)  HIN

c.)  HD

FIG. 6

3/3

a.) 

<span style="float:right">BA</span>

b.)

c.)

d.)

e.)

FIG. 4

1   2

17

18

16b   16a

FIG. 5